# EUROPÄISCHE PATENTSCHRIFT

(11) **EP 1 345 976 B1**
(45) Veröffentlichungstag und Bekanntmachung des Hinweises auf die Patenterteilung: **23.04.2008**
(21) Anmeldenummer: 01270568.7
(22) Anmeldetag: 28.11.2001
(51) Int. Cl.: C08G 18/65, C08G 18/32, C08L 19/00, C08L 21/00

(54) **GELHALTIGE KAUTSCHUKMISCHUNGEN MIT MULTIFUNKTIONELLEN ISOCYANATEN UND POLYOLEN**
RUBBER COMPOUNDS CONTAINING GELS IN ADDITION TO MULTIFUNCTIONAL ISOCYANATES AND POLYOLS
MELANGES DE CAOUTCHOUC RENFERMANT DES GELS AINSI QUE DES ISOCYANATES ET POLYOLS MULTIFONCTIONNELS

(30) Priorität: 11.12.2000 DE 10061543
(43) Veröffentlichungstag der Anmeldung: 24.09.2003
(73) Patentinhaber: LANXESS Deutschland GmbH, 51369 Leverkusen (DE)
(72) Erfinder: OBRECHT, Werner, 47447 Moers (DE); HEILIGER, Ludger, 67433 Neustadt (DE)
(86) Internationale Anmeldenummer: PCT/EP2001/014047
(87) Internationale Veröffentlichungsnummer: WO 2002/048233

(56) Entgegenhaltungen:
- EP-A- 1 048 692
- WO-A-02/14421
- WO-A-93/03914

## Beschreibung

Die vorliegende Erfindung betrifft Kautschukmischungen auf Basis von unvernetzten Kautschuken und von vemetzten Kautschukpartikeln (sogenannten Kautschukgelen oder Mikrogelen) sowie multifunktionellen Isocyanaten und Polyolen. Die erfindungsgemäßen Kautschukmischungen eignen sich zur Herstellung von Kautschukvulkanisaten, die sowohl eine vorteilhafte Kombination mechanischer Eigenschaften, wie Spannungswerte bei 100 % und bei 300 % Dehnung und Bruchdehnung, als auch eine hohe Differenz der Elastizitäten bei 70°C und 23°C aufweisen. Darüber hinaus besitzen die aus den erfindungsgemäßen Kautschukmischungen hergestellten Vulkanisate eine niedrige Dichte, was sich vorteilhaft auf das Gewicht der aus den Vulkanisaten hergestellten Kautschukformkörpern, insbesondere Reifen bzw. Reifenteile, auswirkt.

Es ist bekannt, dass in Kautschukmischungen übliche Füllstoffe, wie Ruß oder Kieselsäure, quantitativ oder partiell durch Kautschukgele ersetzt werden können. Aufgrund der niedrigen Dichte der Kautschukgele weisen die entsprechenden Vulkanisate ein niedrigeres Gewicht auf Zusätzlich findet man bei Verwendung von Kautschukgelen auf Basis von Polybutadien (BR-Gele) hohe Rückprallelastizitäten sowohl bei Raumtemperatur als auch bei 70°C. Derartige Vulkanisate können für die Herstellung niedrigdämpfender Gummiartikel insbesondere niedrigdämpfender Reifenbauteile eingesetzt werden. Bei Verwendung von Kautschukgelen auf SBR-Basis findet man in den entsprechenden Vulkanisaten niedrige Rückprallelastizitäten bei Raumtemperatur und hohe Rückprallelastizitäten bei 70°C. Entsprechende Vulkanisate sind z.B. für Reifenlaufflächen mit vorteilhafter Nassrutschverhalten/Rollwiderstands-Relation geeignet.

Verwiesen wird in diesem Zusammenhang beispielsweise auf US-A 5 124 408, US-A 5 395 891, DE-A 197 01 488.7, DE-A 197 01 487.9, DE-A 199 29 347.3, DE-A 199 39 865.8, DE-A 199 42 620.1.

Für den technischen Einsatz der Kautschukgele in Vulkanisaten ist ihre Verstärkungswirkung nicht ausreichend, wobei unter Verstärkungswirkung das Produkt S₃₀₀ x D, d. h. das Produkt aus Spannungswert bei 300 % Dehnung (S₃₀₀) und Bruchdehnung (D), verstanden wird. Durch Zusätze geeigneter Additive wie z. B. von schwefelhaltigen Organosiliciumverbindungen (DE-A 19 929 347), von verkappten Bismerkaptanen (DE-A 19 942 620) oder von multifunktionellen Isocyanaten (DE-A 19 962 862) wird die Verstärkungswirkung der Kautschukgele verbessert. Der Nachteil bei Verwendung dieser Additive, insbesondere bei Verwendung multifunktioneller Isocyanate ist, dass die Verbesserung des Verstärkungseffekts S₃₀₀ x D mit einer Verschlechterung der Differenz der Rückprallelastizitäten bei 70°C und 23°C (E₇₀-E₂₃) verknüpft ist.

Für viele Einsatzgebiete von vulkanisierten Gummiartikeln wird sowohl ein hohes Niveau mechanischer Eigenschaften insbesondere für das Produkt S₃₀₀ x D als auch eine hohe Elastizitätsdifferenz (E₇₀-E₂₃) gefordert.

Es bestand daher die technische Notwendigkeit, Maßnahmen zu finden, die bei gelgefüllten Kautschukvulkanisaten sowohl die Einstellung eines hohen mechanischen Werteniveaus S₃₀₀ x D als auch hoher Differenzen der Rückprallelastizitäten bei 70°C und 23°C (E₇₀-E₂₃) ermöglichen.

Es wurde gefunden, dass dieses Ziel bei Kautschukmischungen, die Kautschukgele und Zusätze multifunktioneller Isocyanate enthalten, dadurch erreicht wird, dass Polyole zugesetzt werden.

Gegenstand der vorliegenden Erfindung sind daher Kautschukmischungen bestehend aus nicht vemetzten Kautschuken (A), vemetzten Kautschukpartikeln (B), multifunktionellen Isocyanaten (C) sowie Polyolen (D), wobei in der Mischung, jeweils bezogen auf 100 Gew.-Teile (phr) der Kautschukkomponente (A), der Anteil an Komponente (B) 1 bis 150 Gew.-Teile, bevorzugt 5 bis 100 Gew.-Teile, der Anteil an multifunktionellen Isocyanaten (C) 1 bis 100, bevorzugt 3 bis 50 Gew.-Teile sowie der Anteil an Polyolen (D) 1 bis 50, bevorzugt 1 bis 30 Gew.-Teilen, beträgt, wobei als Polyolkomponente (D) Polyester-, Polyether-, Polycarbonatpolyole oder deren Mischungen eingesetzt werden, die ein mittleres Molekulargewicht von 62 bis 10.000 g/mol besitzen.

Unter nicht vernetzten Kautschuken (A) versteht man solche Kautschuke, die nach DIN/ISO 1629 als R-Kautschuke bezeichnet werden. Diese Kautschuke haben in der Hauptkette eine Doppelbindung. Hierzu gehören beispielsweise:

| | |
|---|---|
| NR: | Naturkautschuk |
| IR: | Polyisopren |
| IS: | Isopren/Styrol-Copolymerisate |
| SBR: | Styrol/Butadienkautschuk |
| BR: | Polybutadienkautschuk |
| NBR: | Nitrilkautschuk |
| IIR: | Butylkautschuk |
| BIIR: | bromierte Isobutylen/Isopren-Copolymerisate mit Bromgehalten von 0,1-10 Gewichtsprozent |
| CIIR: | chlorierte Isobutylenllsopren-Copolymerisate mit Bromgehalten von 0,1-10 Gewichtsprozent |
| HNBR: | Hydrierter bzw. teilhydrierter Nitrilkautschuk |
| SNBR: | Styrol/Butadien/Acrylnitril-Kautschuk |
| SIBR: | Styrol/Butadien/Isopren-Kautschuk |
| CR: | Polychloropren |
| ENR: | Epoxydierter Naturkautschuk oder Mischungen davon |
| X-NBR: | carboxylierte Nitrilkautschuke |
| X-SBR: | carboxylierte Styrol-Butadien-Copolymerisate. |

Weiterhin können aber auch solche Kautschuke eingesetzt werden, die nach DIN/ISO 1629 als M-, O-, Q- und U -Kautshuke bezeichnet werden. Hierzu gehören z.B.:

| | |
|---|---|
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, |
| AU: | Polyesterurethanpolymerisate, |
| EU: | Polyetherurethanpolymerisate. |

Die in den erfindungsgemäßen Kautschukmischungen einzusetzenden Kautschuke der oben genannten Art können selbstverständlich durch solche funktionelle Gruppen modifiziert sein, die mit den einzusetzenden funktionellen Isocyanaten zu reagieren vermögen und eine Ankopplung der vemetzten Kautschukpartikel an die umgebende Kautschukmatrix im vulkanisierten Zustand zu verbessern vermögen.

Besonders bevorzugt sind insbesondere solche nicht vemetzten Kautschuke, die durch Hydroxyl-, Carboxyl-, Amino- und/oder Amidgruppen funktionalisiert sind. Die Einführung funktioneller Gruppen kann direkt bei der Polymerisation durch Copolymerisation mit geeigneten Comonomeren oder nach der Polymerisation durch Polymermodifikation erfolgen.

Die Menge an funktionellen Gruppen in den Kautschuken beträgt üblicherweise 0,05 bis 25 Gew.-%, bevorzugt 0,1 bis 10 Gew.-%.

Als vernetzte Kautschukpartikel (B), sogenannte Kautschukgele, Gele oder Mikrogele, werden in die erfindungsgemäßen Gemische insbesondere solche eingesetzt, die durch entsprechende Vernetzung folgender Kautschuke erhalten wurden:

| | |
|---|---|
| NR: | Naturkautschuk |
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| SNBR: | Styrol/Acrylnitril/Butadien-Polymerisate |
| X-SBR: | carboxlylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, |
| AU: | Polyesterurethanpolymerisate, |
| EU: | Polyetherurethanpolymerisate. |

Die erfindungsgemäß einzusetzenden Kautschukpartikel besitzen üblicherweise Teilchendurchmesser von 5 bis 1000 nm, bevorzugt 10 bis 600 nm (Durchmesserangaben nach DIN 53 206). Aufgrund ihrer Vernetzung sind sie unlöslich und in geeigneten Lösungsmitteln, z.B. Toluol, quellbar. Die Quellungsindizes der Kautschukpartikel (QI) in Toluol betragen ca. 1 bis 15, vorzugsweise 1 bis 10. Der Quellungsindex wird aus dem Gewicht des lösungsmittelhaltigen Gels (nach Zentrifugation mit 20 000 Upm) und dem Gewicht des trockenen Gels berechnet, wobei QI = Nassgewicht des Gels/Trockengewicht des Gels bedeutet. Der Gelgehalt der erfindungsgemäßen Kautschukpartikel beträgt üblicherweise 80 bis 100 Gew.-%, bevorzugt 90 bis 100 Gew.-%.

Die Herstellung der einzusetzenden vernetzten Kautschukpartikel aus den zugrundeliegenden Kautschuken der zuvor genannten Art ist prinzipiell bekannt und beispielsweise beschrieben in US-A 5 395 891 und EP-A 981 000 49.0.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in der deutschen Patentanmeldung Nr. 199 39 865.8. Auch solche Kautschukpartikel können in die erfindungsgemäßen Mischungen eingesetzt werden.

Selbstverständlich können die vernetzten Kautschukpartikel wie die zuvor erwähnten nicht vemetzten Kautschuke ebenfalls durch geeignete funktionelle Gruppen modifiziert sein, die - wie zuvor erwähnt - mit den einzusetzenden multifunktionellen Isocyanaten zu reagieren vermögen und/oder eine Verbesserung der Ankopplung der Kautschukpartikel an die umgebende Kautschukmatrix im vulkanisierten Zustand bewirken.

Als bevorzugte funktionelle Gruppen sind wiederum zu nennen die Hydroxyl-, Carboxyl-, Amino- und/oder Amidgruppen. Der mengenmäßige Anteil dieser funktionellen Gruppen entspricht dem Anteil dieser Gruppen bei den zuvor genannten und nicht vernetzten Kautschuken.

Die Modifizierung der vernetzten Kautschukpartikeln (Kautschukgelen) und die Einführung der zuvor genannten funktionellen Gruppen ist dem Fachmann ebenfalls bekannt und beispielsweise beschrieben in den deutschen Patentanmeldungen Nr. 199 19 459.9, 199 29 347.3, 198 34 804.5.

Zu erwähnen sei an dieser Stelle nur die Modifizierung der entsprechenden Kautschuke in wässriger Dispersion mit entsprechenden polaren Monomeren, die eine Hydroxyl-, Amino-, Amid- und/oder eine Carboxylgruppe in die Kautschuke einzuführen vermögen.

Bevorzugt werden in die erfindungsgemäßen Kautschukmischungen modifizierte, vernetzte Kautschukpartikel eingesetzt, die an der Oberfläche durch -OH; -COOH; -NH₂; -CONH₂; -CONHR-Gruppen modifiziert sind und in dem zuvor erwähnten Mengenbereich liegen.

Als multifunktionelle Isocyanate (Komponente C) eignen sich für die erfindungsgemäßen Kautschukmischungen Isocyanate mit zwei oder mehr, bevorzugt 2 bis 10, Isocyanatgruppen im Molekül. Hierfür kommen die bekannten aliphatischen, cycloaliphatischen, aromatischen, oligomeren und polymeren multifunktionellen Isocyanate in Betracht. Ein Vertreter der aliphatischen multifunktionellen Isocyanate ist z.B. Hexamethylendiisocyanat (HDI); ein Vertreter der cycloaliphatischen multifunktionellen Isocyanate ist z.B. 1-Isocyanato-3-(isocyanatomethyl)-3,5,5-trimethylcyclohexan (Isophorondiisocyanat/IPDI). Als Vertreter der aromatischen multifunktionellen Isocyanate seien genannt: 2,4- und 2,6-Diisocyanatotoluol sowie das entsprechende technische Isomerengemisch (TDI); Diphenylmethandiisocyanate, wie Diphenylmethan-4,4'-diisocyanat, Diphenylmethan-2,4'-diisocyanat, Diphenylmethan-2,2'-diisocyanat sowie die entsprechenden technischen Isomerengemische (MDI). Außerdem sind zu nennen Naphthalin-1,5-diisocyanat (NDI) sowie 4,4',4"-Triisocyanatotriphenylmethan.

Zur Erniedrigung des Dampfdrucks der multifunktionellen Isocyanate kann es notwendig sein, die multifunktionellen Isocyanate in höhermolekularer Form einzusetzen. Die wichtigsten Methoden zur Herstellung höhermolekularer Produkte sind die Dimerisierung, wie beispielsweise beim dimerisierten 2,4-Diisocyanatotoluol praktiziert, welches als Desmodur TT® im Handel befindlich ist, die Trimerisierung sowie die Polymerisation.

Zur Vermeidung des Riskos einer vorzeitigen Vernetzungsreaktion, z. B. bei der Mischungsherstellung (Reduktion der Scorchantälligkeit der Mischungen) ist es zweckmäßig die Isocyanatfunktionen reversibel zu blockieren. Insbesondere die temperaturreversible Blockierung (Verkappung) der Isocyanatgruppen mit speziellen Alkoholen, Phenolen, Caprolactamen, Oximen oder β-Dicarbonylverbindungen der bekannten Art ist von besonderem Interesse.

Als Polyole (Komponente D) der erfindungsgemäßen Kautschukmischungen kommen Polyesterpolyole, Polyetherpolyole, Polycarbonatpolyole oder deren Gemische in Frage, die ein mittleres Molekulargewicht von 62 bis 10.000 g/mol besitzen.

Geeignete Polyetherole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propandiol, 1,2-Propandiol, 1,4-Butandiol, 1,6-Hexandiol, Bisphenol A, Resorcin, Brenzkatechin, Trimethylolpropan, Glycerin, Pentaerythrit, Sorbit, Glukose, abgebaute Stärke, Ethylendiamin und Diaminotoluol.

Gegebenenfalls können auch Mischungen von Startcrmolekülen eingesetzt werden. Geeignete Polyetherole sind ferner die hydroxylgruppenhaltigen Polymerisationsprodukte des Tetrahydrofurans.

Es können auch trifunktionelle Polyether in Anteilen von 0 bis 30 Gew.-%, bezogen auf die bifunktionellen Polyether eingesetzt werden.

Die im wesentlichen linearen Polyetherole besitzen Molekulargewichte von 62 bis 10.000, bevorzugt 100 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure, und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 62 bis 10.000, bevorzugt 200 bis 5000.

Die einzusetzenden Polycarbonatpolyole können in bekannter Weise beispielsweise hergestellt werden durch Umesterungsverfahren der oben genannten Diole mit einem Kohlensäurediester, z.B. Diphenylcarbonat. Die Molekulargewichte liegen bei etwa 62 bis 10.000, bevorzugt 200 bis 5000.

Bevorzugt sind folgende Polyole zu nennen: 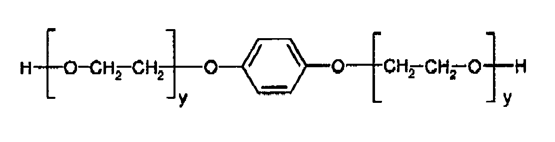 mit
y = 1 bis 20,
(Ein entsprechendes Produkt mit y = 1 wird als Vernetzer 30/10 von der Fa. Rheinchemie vertrieben.)
und: 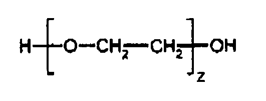 mit
z = 1 bis 20,
Entsprechende Produkte mit Molmassen von 285 bis 315 g/Mol und 380 bis 420 g/Mol sind z.B. als Polyethylenglykol 300 und Polyethylenglykol 400 bei der Firma Merck, Darmstadt, erhältlich.

Die erfindungsgemäßen Kautschukmischungen können weitere bekannte Kautschukhilfsmittel und Füllstoffe enthalten. Besonders geeignete Füllstoffe zur Herstellung der erfindungsgemäßen Kautschukmischungen sind z.B.:
- Ruße. Die hierbei zu verwendenden Ruße sind nach dem Flammruß-, Furnace- oder Gasrußverfahren hergestellt und besitzen BET-Oberflächen von 20-200 m²/g wie z.B: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen.
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).

Die Füllstoffe können in Mengen von 0,1 bis 100 Gew.-Teilen, bezogen auf 100 Gew.-Teile der Kautschukkomponente A eingesetzt werden.

Die genannten Füllstoffe können allein oder im Gemisch untereinander eingesetzt werden.

Besonders bevorzugt sind Kautschukmischungen, die neben den erwähnten Mengen an Komponenten A), B) und C) 10 bis 100 Gew.-Teile an vernetzten Kautschukpartikeln (Komponente B) und 0,1 bis 100 Gew.-Teile Ruß und/oder 0,1 bis 100 Gew.-Teilen an sogenannten hellen Füllstoffen der oben genannten Art, jeweils bezogen auf 100 Gew.-Teile der Kautschukkomponente A, enthalten. Dabei beträgt die Menge an Füllstoffen bei Einsatz eines Gemisches aus Kautschukgel, Ruß und hellen Füllstoffen maximal ca. 150 Gew.-Teile.

Die erfindungsgemäßen Kautschukmischungen können - wie erwähnt - weitere Kautschukhilfsmittel enthalten, wie Vernetzer, Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie Bis-(triethoxysilylpropyl)-tetrasulfid. Die Kautschukhilfsmittel sind beispielsweise beschrieben in J. van Alphen, W.J.K. Schönbau, M. van Tempel Gummichemikalien, Berliner Union GmbH Stuttgart 1956 sowie in Handbuch für die Gummiindustrie, Bayer AG, 2. Auflage, 1991.

Die Kautschukhilfsmittel werden in üblichen Mengen, die sich u.a. nach dem Verwendungszweck richten, eingesetzt. Übliche Mengen sind beispielsweise 0,1 bis 50 Gew.-Teile, bezogen auf 100 Gew.-Teile Kautschuk (A).

Darüber hinaus können die erfindungsgemäßen Kautschukmischungen noch übliche Vemetzer wie Schwefel, Schwefelspender, Peroxide oder andere Vernetzungsmittel, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat enthalten. Außerdem kommen noch in Betracht die Acrylate und Methacrylate von mehrwertigen, vorzugsweise 2 bis 4-wertigen C₂- bis C₁₀-Alkoholen, wie Ethylenglykol, Propandiol-1,2-butandiol, Hexandiol, Polyethylenglykol mit 2 bis 20, vorzugsweise 2 bis 8, Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure und/oder Itaconsäure.

Bevorzugt werden als Vernetzer Schwefel und Schwefelspender in den bekannten Mengen, beispielsweise in Mengen von 0,1 bis 15, bevorzugt 0,5 bis 7, bezogen auf 100 Gew.-Teile an Kautschukkomponente (A) eingesetzt.

Die erfindungsgemäßen Kautschukmischungen können darüber hinaus noch Vulkanisationsbeschleuniger der bekannten Art enthalten, wie Mercaptobenzothiazole, Sulfenamide, Guanidine, Thiurame, Dithiocarbamate, Thioharnstoffe, Thiocarbonate und/oder Dithiophosphate. Die Vulkanisationsbeschleuniger werden ebenso wie die Vemetzer in Mengen von ca. 0,1 bis 10 Gew.-Teilen, bevorzugt 0,5 bis 5 Gew.-Teilen, bezogen auf 100 Gew.-Teile an Kautschukkomponente (A) eingesetzt.

Die erfindungsgemäßen Kautschukmischungen können in bekannter Weise hergestellt werden, beispielsweise durch Vermischen der festen Einzelkomponenten in den dafür geeigneten Aggregaten, wie Walzen, Innenmischern oder Mischextrudern. Die Abmischung der einzelnen Komponenten miteinander erfolgt üblicherweise bei Mischtemperaturen von 20 bis 100°C.

Die erfindungsgemäßen Kautschukmischungen können auch hergestellt werden, indem man die beiden Kautschukkomponenten (A) und (B) in ihrer Latexform miteinander vermischt und anschließend zu dieser Latexmischung die anderen Komponenten einmischt und anschließend die Latexmischung durch übliche Operationen, wie Eindampfen, Ausfällen oder Gefrier-Koagulation aufarbeitet zu den entsprechenden Kautschukmischungen.

Ziel bei der Herstellung der erfindungsgemäßen Kautschukmischung ist vor allem, dass die Mischungskomponenten innig miteinander vermischt werden und eine gute Dispersion der eingesetzten Füllstoffe in der Kautschukmatrix erreicht wird.

Die erfindungsgemäßen Kautschukmischungen eignen sich zur Herstellung von Kautschukvulkanisaten durch entsprechende Vernetzungsreaktionen mit den bekannten Vernetzungsagenzien und dienen zur Herstellung von Formkörpern aller Art, insbesondere zur Herstellung von Kabelmänteln, Schläuchen, Treibriemen, Förderbändern, Walzenbeschlägen, Reifen und Reifenbauteilen, Schuhsohlen, Dichtungsringen, Dämpfungselementen sowie Membranen, bevorzugt von Reifen bzw. Reifenbauteilen.

### Beispiele

### Gel (1):

Gel (1) ist ein SBR-Gel. Es wird in der erfindungsgemäßen Kautschukmischung in Form eines Masterbatches mit einem Anteil von 50 Gew.-% NR-Kautschuk eingesetzt.

Gel (1) wird durch Nachvemetzung eines SBR-Latex mit einem Styrolanteil von 23 Gew.-% (Baystal BL 1357^{®} der Firma Bayer France, Pôrt Jérôme) mit 1,5 phr Dicumylperoxid hergestellt. Die Vernetzungsreaktion und die Aufarbeitung erfolgten gemäß dem Beispiel 1 von EP-A 0 854 170. Charakteristische Daten zu Gel (1) sind in nachfolgender Tabelle zusammengefasst.

### Gel (2):

Gel (2) ist ein hydroxylmodifiziertes SBR-Gel. Es wird ausgehend von Baystal BL 1357, der mit 1,5 phr Dicumylperoxid vernetzt wurde, durch Pfropfung mit Hydroxyethylmethacrylat (HEMA) oberflächenmodifiziert. Die Oberflächenmodifikation mit HEMA und die Koagulation des mit HEMA modifizierten SBR-Gels werden nachfolgend beschrieben.

Für die Modifikation mit Hydroxyethylmethacrylat legte man den mit 1,5 phr Dicumylperoxid nachvemetzten SBR-Latex in einem Polymerisationsreaktor vor und verdünnte den Latex mit Wasser, so dass der Feststoffgehalt 20 Gew.-% betrug. Nach dem Zusatz von 3 phr 97 %igem Hydroxymethylmethacrylat, bezogen auf den Latexfeststoffgehalt, und der Zugabe von 0,12 phr 50 %igem p-Methanhydroperoxid erhitzte man unter Rühren die Reaktionsmischung auf 70°C und rührte 1 Stunde bei dieser Temperatur nach. Man gab dann innerhalb von 1 Stunde 0,05 Gew.-%, bezogen auf den Latexfeststoffgehalt, einer wässrigen 0,5 gew.-%igen Lösung des Natriumsalzes von 1-Hydroxymethansulfinsäure-dihydrat (Rongalit®der Fa. BASF) zu. Während der gesamten Reaktion hielt man den pH-Wert durch Zugabe von 1 N Natronlauge konstant, und zwar auf pH 9. Nach einer Reaktionszeit von 1 Stunde bei 70°C hatte der Latex einen Polymerisationsumsatz von 90 %. Die Dichte der Latexteilchen betrug 0,987 g/cm³. Die Teilchendurchmesser betrugen: d₁₀ = 50 nm; d₅₀ = 57 nm; d₈₀ = 61 nm;

Vor der Fällung des hydroxylmodifizierten SBR-Mikrogels rührte man in den Latex zusätzlich die nachfolgend aufgeführte Alterungsschutzmittel jeweils in den angegebenen Mengen, bezogen auf 100 Gew.-Teile Feststoff, ein:

| | |
|---|---|
| 0,05 phr | 2,2-Methylen-bis-(4-Methyl-6-cyclohexylphenol) |
| | (Vulkanox® ZKF der Firma Bayer AG) |
| 0,22 phr | Di-t-Butyl-p-Kresol (Vulkanox® KB der Firma Bayer AG) |
| 0,38 phr | Di-Laurylthiodipropionat (PS 800 der Firma Ciba Geigy AG). |

Zur Fällung von 5,035 kg eines 19,86 %igen mit Hydroxylgruppen modifizierten SBR-Gel-Latex legte man 6000 g Wasser, 795,6 g Kochsalz und 425 g Fällungsmittel (Superfloc^{®} C567 (1 %ig) der Firma American Cyanamide Corporation) vor.

Man erhitzte die vorgelegten Fällungsmittel auf 60°C und stellte mit 10 gew.-%iger Schwefelsäure einen pH-Wert von 4 ein. Unter Einhaltung dieses pH-Wertes gab man den modifizierten Latex in das Fällungsagens. Man erhitzte nach Latexzugabe die Mischung auf 60°C und kühlte danach die Mischung durch Zugabe von kaltem Wasser auf ca. 30°C ab. Das dabei ausfallende Kautschukgel wurde mehrmals gewaschen und nach Filtration bei 70°C unter Vakuum bis zur Gewichtskonstanz getrocknet (ca. 60 Stunden).

Das erhaltene Gel (2) besaß einen Gelgehalt von 97 Gew.-%, wobei der Quellungsindex des vergelten Anteils 5,9 betrug. Die OH-Zahl des erhaltenen Gels (A) betrug 9 mg KOH pro Gramm Kautschukgel und die Glastemperatur T_{g} betrug -19°C.

| Gel | Gel-typ | Styrol-Gehalt | DCP-Menge | Durchmesser d₅₀ | Gel-gehalt | QI | Tg [°C] | Dichte der Latexteilchen | HEMA* |
|---|---|---|---|---|---|---|---|---|---|
| | | [Gew.%] | [phr] | [nm] | [%] | | | [g/cm³] | [phr] |
| (1) | SBR | 23 | 1,5 | 56 | 98 | 4,9 | -22,5 | 0,9819 | - |
| (2) | SBR | 23 | 1,5 | 57 | 97 | 5,9 | -19 | 0,987 | 3 |

| | | | | | | | | | |
|---|---|---|---|---|---|---|---|---|---|
| * Hydroxyethylmethacrylat | | | | | | | | | |

### Herstellung der Kautschukmischungen, deren Vulkanisation sowie die gemessenen physikalischen Werte der Vulkanisate

Zur Demonstration der erfindungsgemäßen Effekte wurden folgende Compoundvariationen durchgeführt:

| **Mischungsserie** | **SBR-Gel** | **Multifunktionelle Isocyanate** | **Polyolkomponenten** |
|---|---|---|---|
| A) | Gel (2) (mit HEMA hydroxylmodifiziert) | Isocyanurat auf Basis von Hexamethyendiisocyanat | 1,4-Bis(β-hydroxyethoxy)benzol |
| B) | Gel (1) | Roh-Diphenylmethandiisocyanat (MDI) aus ca. 50 %MDI und ca. 50 % polymerisiertem MDI | 1,4-Bis(β-hydroxyethoxy)benzol |
| | (umnodifiziert) | | Polyethylenglycol (MW: 300g/mol) |
| | | | Polyethylenglycol (MW: 300g/mol) |
| C) | Gel (1) (unmodifiziert) | Isocyanurat auf Basis von Isophorondiisocyanat | 1,4-Bis(β-hydroxyethoxy)benzol |

### Mischungsserie A)

Auf einer Laborwalze wurden die in der nachfolgenden Tabelle aufgeführten Mischungsbestandteile (Mengenangabe in phr) in üblicher Weise gemischt.

| Mischungs-Nr.: | 1 | 2 | 3 |
|---|---|---|---|
| Mastizierter Naturkautschuk¹⁾ | 100 | 100 | 100 |
| Hydroxylmodifiziertes SBR-Gel (2) | 30 | 30 | 30 |
| Stearinsäure | 3,0 | 3,0 | 3,0 |
| Zinkoxid | 3,0 | 3,0 | 3,0 |
| Ozonschutzwachs²⁾ | 1,5 | 1,5 | 1,5 |
| IPPD³⁾ | 1,0 | 1,0 | 1,0 |
| TMQ⁴⁾ | 1,0 | 1,0 | 1,0 |
| Mineralöl-Weichmacher⁵⁾ | 3,0 | 3,0 | 3,0 |
| Schwefel | 1,6 | 1,6 | 1,6 |
| Diolkomponente: 1,4-Bis(β-hydroxyethoxy)benzol⁶ | - | - | 5 |
| Beschleuniger TBBS⁷⁾ | 2 | 2 | 2 |
| Multifunktionelles Isocyanat⁸⁾ | - | 10 | 10 |

| | | | |
|---|---|---|---|
| ¹⁾ TSR 5, Defo 700 ²⁾ Mischung von Paraffinen und Mikrowachsen (Antilux^{®} 654 der Rheinchemie Rheinau GmbH) ³⁾ N-Isopropyl-N'-phenyl-p-phenylendiamin (Vulkanox^{®} 4010 NA der Bayer AG) ⁴⁾ 2,2,4-Trimethyl-1,2-dihydrochinolin (polym.) (Vulkanox^{®} HS der Bayer AG) ⁵⁾ Enerthene^{®} 1849-1 der Firma BP Oil GmbH ⁶⁾ Vemetzer 3010^{®} der Fa. Rheinchemie ⁷⁾ N-tert.Butyl-2-benzthiazylsulfenamid (Vulkacit NZ^{®} der Bayer AG) ⁸⁾ Desmodur^{®} N 3300 der Bayer AG | | | |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, F_{max.}-Fₐ., t₁₀, t₈₀ und t₉₀ besümmt.

| Mischungs-NR.: | 1 | 2 | 3 |
|---|---|---|---|
| Fa [dNM] | 0,55 | 1,97 | 1,45 |
| Fₘₐₓ [dNM] | 10,87 | 10,83 | 11,27 |
| Fₘₐₓ - Fₐ [dNM] | 10,32 | 8,86 | 9,82 |
| t₁₀ [min.] | 5,23 | 3,74 | 3,09 |
| t₈₀ [min.] | 7,48 | 6,14 | 5,42 |
| t₉₀ [min] | 9,17 | 7,11 | 6,40 |

Nach DIN 53 529, Teil 3 bedeuten:

| | |
|---|---|
| Fₐ: | Vulkameteranzeige im Minimum der Vernetzungsisotherme |
| Fₘₐₓ: | Maximum der Vulkameteranzeige |
| Fₘₐₓ - Fₐ: | Differenz der Vulkameteranzeigen zwischen Maximum und Minimum |
| t₁₀: | Zeit, bei der 10 % des Umsatzes erreicht sind |
| t₈₀: | Zeit, bei der 80 % des Umsatzes erreicht sind |
| t₉₀: | Zeit, bei der 90 % des Umsatzes erreicht sind |

Die Mischungen werden in der Presse bei 160°C vulkanisiert, wobei die nachfolgenden Vulkanisationszeiten gewählt wurden:

| Mischungs-Nr.: | 1 | 2 | 3 |
|---|---|---|---|
| Vulkanisationszeit [min] | 17 | 17 | 17 |

An den Vulkanisaten wurden folgende Eigenschaften bestimmt:

| Mischungs-Nr.: | 1 | 2 | 3 |
|---|---|---|---|
| Zugfestigkeit (F) [MPa] | 27,6 | 18,0 | 25,5 |
| Bruchdehnung (D) [%] | 660 | 355 | 530 |
| Spannungswert bei 50 % Dehnung (S₅₀) [MPa] | 0,9 | 1,3 | 1,5 |
| Spannungswert bei 100 % Dehnung (S₁₀₀) [MPa] | 1,3 | 2,3 | 2,5 |
| Spannungswert bei 300 % Dehnung (S₃₀₀) [MPa] | 4,5 | 13,1 | 9,5 |
| Härte Shore A, 23°C | 54 | 62 | 64 |
| Härte Shore A, 70°C | 48 | 56 | 52 |
| Rückprallelastizität bei 23°C (E₂₃) [%] | 47 | 56 | 38 |
| Rückprallelastizität bei 70°C (E₇₀) [%] | 68 | 68 | 63 |
| Abrieb 60er Schmirgel [mm³] | 106 | 80 | 111 |
| E₇₀-E₂₃ | 21 | 12 | 25 |
| S₃₀₀xD | 2970 | 4650 | 5035 |

### Ergebnis:

In der Mischungsserie A) wird gezeigt, dass die Vulkanisateigenschaften (S₃₀₀ x D) eines Kautschukcompounds, der ein hydroxylmodifiziertes SBR-Gel enthält, durch den Zusatz eines trimerisierten Hexamethylendiisocyanats (Desmodur^{®} N 3300) verbessert und die Elastizitätsdifferenz (E₇₀-E₂₃) verschlechtert wird. Durch Zusatz von 1,4-Bis(β-hydroxyethoxy)benzol (Vernetzer 30/10) zum isocyanathaltigen Compound werden sowohl das Produkt S₃₀₀ x D als auch die Elastitzitätsdifferenz (E₇₀-E₂₃) verbessert.

### Mischungserie B)

| Mischungs-Nr.: | 1 | 2 | 3 | 4 |
|---|---|---|---|---|
| Mastizierter Naturkautschuk¹⁾ | 60 | 60 | 60 | 60 |
| SBR-Gel (1) (50%iger Masterbatch in NR) | 80 | 80 | 80 | 80 |
| Stearinsäure | 3,0 | 3,0 | 3,0 | 3,0 |
| Zinkoxid | 3,0 | 3,0 | 3,0 | 3,0 |
| Ozonschutzwachs²⁾ | 1,5 | 1,5 | 1,5 | 1,5 |
| IPPD³⁾ | 1,0 | 1,0 | 1,0 | 1,0 |
| TMQ⁴⁾ | 1,0 | 1,0 | 1,0 | 1,0 |
| Mineralöl-Weichmacher⁵⁾ | 3,0 | 3,0 | 3,0 | 3,0 |
| Schwefel | 1,6 | 1,6 | 1,6 | 1,6 |
| Beschleuniger TBBS⁶⁾ | 2 | 2 | 2 | 2 |
| Multifunktionelles Isocyanat auf MDI-Basis⁷⁾ | 10 | 10 | 10 | 10 |
| 1,4-Bis(β-hydroxyethoxy)benzol⁸⁾ | - | 3 | - | - |
| PEG 300⁹⁾ | - | - | 5 | - |
| PEG 400¹⁰⁾ | - | - | - | 5 |

| | | | | |
|---|---|---|---|---|
| ¹⁾ TSR 5, Defo 700 ²⁾ Mischung von Paraffinen und Mikrowachsen (Antilux^{®} 654 der Rheinchemie Rheinau GmbH) ³⁾ N-Isopropyl-N'-phenyl-p-phenylendiamin (Vulkanox^{®} 4010 NA der Bayer AG) ⁴⁾ 2,2,4-Trimethyl-1,2-dihydrochinolin (polym.) (Vulkanox^{®} HS der Bayer AG) ⁵⁾ Enerthene^{®} 1849-1 der Firma BP Oil GmbH ⁶⁾ N-tert.Butyl-2-benzthiazylsulfenamid (Vulkacit NZ^{®} der Bayer AG) ⁷⁾ Desmodur^{®} 44 V 20 LF der Bayer AG ⁸⁾ Vernetzer 30/10^{®} der Fa. Rheinchemie ⁹⁾ Polyethylenglykol mit einem mittleren Molekulargewicht von 285 bis 315 g/mol (Fa. Merck) ¹⁰⁾ Polyethylenglykol mit einem mittleren Molekulargewicht von 380 bis 420 g/mol (Fa. Merck) | | | | |

Das Vulkanisationsverhalten der Mischungen wurde im Rheometer bei 160°C nach DIN 53 529 mit Hilfe des Monsantorheometers MDR 2000E untersucht. Auf diese Weise wurden charakteristische Daten wie Fₐ, Fₘₐₓ, F_{max.}-Fₐ., t₁₀, t₈₀ und t₉₀ bestimmt.

| Mischungs-NR.: | 1 | 2 | 3 | 4 |
|---|---|---|---|---|
| Fₐ [dNM] | 2,6 | 2,0 | 1,0 | 1,3 |
| Fₘₐₓ [dNM] | 10,7 | 10,0 | 10,3 | 10,2 |
| Fₘₐₓ - Fₐ [dNM] | 8,1 | 8,0 | 9,3 | 8,9 |
| t₁₀ [min.] | 10,3 | 8,9 | 5,3 | 5,4 |
| t₈₀ [min.] | 15,5 | 12,4 | 8,7 | 8,8 |
| t₉₀ [min] | 17,2 | 13,9 | 10,0 | 10,0 |

Nach DIN 53 529, Teil 3 bedeuten:

| | |
|---|---|
| Fₐ: | Vulkameteranzeige im Minimum der Vernetzungsisotherme |
| Fₘₐₓ: | Maximum der Vulkameteranzeige |
| Fₘₐₓ - Fₐ: | Differenz der Vulkameteranzeigen zwischen Maximum und Minimum |
| t₁₀: | Zeit, bei der 10 % des Umsatzes erreicht sind |
| t₈₀: | Zeit, bei der 80 % des Umsatzes erreicht sind |
| t₉₀: | Zeit, bei der 90 % des Umsatzes erreicht sind |

Die Mischungen werden in der Presse bei 160°C vulkanisiert, wobei die nachfolgenden Vulkanisationszeiten gewählt wurden:

| Mischungs-Nr.: | 1 | 2 | 3 | 4 |
|---|---|---|---|---|
| Vulkanisationszeit [min] | 28 | 28 | 19 | 19 |

An den Vulkanisaten wurden folgende Eigenschaften bestimmt:

| Mischungs-Nr.: | 1 | 2 | 3 | 4 |
|---|---|---|---|---|
| Zugfestigkeit (F) [MPa] | 25,0 | 27,2 | 26,8 | 25,3 |
| Bruchdehnung (D) [%] | 497 | 540 | 535 | 510 |
| Spannungswert bei 50 % Dehnung (S₅₀) [MPa] | 1,0 | 1,0 | 1,1 | 1,0 |
| Spannungswert bei 100 % Dehnung (S₁₀₀) [MPa] | 1,7 | 1,6 | 1,7 | 1,6 |
| Spannungswert bei 300 %Dehnung (S₃₀₀) [MPa] | 8,6 | 8,2 | 8,5 | 8,7 |
| Härte Shore A, 23°C | 57 | 56 | 56 | 56 |
| Härte Shore A, 70°C | 52 | 50 | 50 | 51 |
| Rückprallelastizität bei 23°C (E₂₃) [%] | 49 | 48 | 46 | 48 |
| Rückprallelastizität bei 70°C (E₇₀) [%] | 66 | 66 | 64 | 67 |
| Abrieb 60er Schmirgel [mm³] | 99 | 105 | 118 | 115 |
| E₇₀-E₂₃ | 17 | 18 | 18 | 19 |
| S₃₀₀ x D | 4274 | 4428 | 4548 | 4437 |

### Ergebnis:

In der Mischungsserie B) wird gezeigt, dass sowohl die Vulkanisateigenschaften (S₃₀₀ x D) als auch die Elastizitätsdifferenzen (E₇₀-E₂₃) von Kautschukcompounds, die unmodifizierte SBR-Gele sowie multifunktionelle Isocyanate (in diesem Fall: Roh-MDI) enthalten, durch Zusätze von 3 phr Vemetzer 30/10, bzw. 5 phr Polyethylenglycol mit einem Molgewicht von 300 g/mol bzw. 5 phr Polyethylenglykol mit einem Molgewicht von 400 g/mol verbessert werden.

### Mischungserie C)

| Mischungs-Nr.: | 1 | 2 | 3 |
|---|---|---|---|
| Mastizierter Naturkautschuk¹⁾ | 60 | 60 | 60 |
| SBR-Gel (1) (50%iger Masterbatch in NR | 80 | 80 | 80 |
| Stearinsäure | 3,0 | 3,0 | 3,0 |
| Zinkoxid | 3,0 | 3,0 | 3,0 |
| Ozonschutzwachs²⁾ | 1,5 | 1,5 | 1,5 |
| IPPD³⁾ | 1,0 | 1,0 | 1,0 |
| TMQ⁴⁾ | 1,0 | 1,0 | 1,0 |
| Mineralöl-Weichmacher⁵⁾ | 3,0 | 3,0 | 3,0 |
| Schwefel | 1,6 | 1,6 | 1,6 |
| Beschleuniger TBBS⁶⁾ | 2 | 2 | 2 |
| Trimerisiertes Isophorondiisocyanat⁷⁾ | 10 | 10 | 10 |
| Diolkomponente: 1,4-Bis(β-hydroxyethoxy)benzol⁸⁾ | - | 3 | 5 |

| | | | |
|---|---|---|---|
| ¹⁾ TSR 5, Defo 700 ²⁾ Mischung von Paraffinen und Mikrowachsen (Antilux^{®} 654 der Rheinchemie Rheinau GmbH) ³⁾ N-Isopropyl-N'-phenyl-p-phenylendiamin (Vulkanox^{®} 4010 NA der Bayer AG) ⁴⁾ 2,2,4-Trimethyl-1,2-dihydrochinolin (polym.) (Vulkanox^{®} HS der Bayer AG) ⁵⁾ Enerthene^{®} 1849-1 der Firma BP Oil GmbH ⁶⁾ N-tert.Butyl-2-benzthiazylsulfenamid (Vulkacit NZ^{®} der Bayer AG) ⁷⁾ Desmodur^{®} Z 4300 der Bayer AG ⁸⁾ Vemetzer 30/10^{®} der Fa. Rheinchemie | | | |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, Fₘₐₓ.-Fₐ., t₁₀, t₈₀ und t₉₀ bestimmt.

| Mischungs-NR.: | 1 | 2 | 3 |
|---|---|---|---|
| Fₐ [dNM] | 1,8 | 1,3 | 1,1 |
| Fₘₐₓ [dNM] | 12,9 | 11,6 | 10,0 |
| Fₘₐₓ - Fₐ [dNM] | 11,1 | 10,3 | 8,9 |
| t₁₀ [min.] | 4,0 | 5,2 | 5,2 |
| t₈₀ [min.] | 11,8 | 10,8 | 9,2 |
| t₉₀ [min] | 14,1 | 13,1 | 11,3 |

Nach DIN 53 529, Teil 3 bedeuten:

| | |
|---|---|
| Fₐ: | Vulkameteranzeige im Minimum der Vernetzungsisotherme |
| Fₘₐₓ: | Maximum der Vulkameteranzeige |
| Fₘₐₓ - Fₐ: | Differenz der Vulkameteranzeigen zwischen Maximum und Minimum |
| t₁₀: | Zeit, bei der 10 % des Umsatzes erreicht sind |
| t₈₀: | Zeit, bei der 80 % des Umsatzes erreicht sind |
| t₉₀: | Zeit, bei der 90 % des Umsatzes erreicht sind |

Die Mischungen werden in der Presse bei 160°C vulkanisiert, wobei die nachfolgenden Vulkanisationszeiten gewählt wurden:

| Mischungs-Nr.: | 1 | 2 | 3 |
|---|---|---|---|
| Vulkanisationszeit [min] | 28 | 28 | 28 |

An den Vulkanisaten wurden folgende Eigenschaften bestimmt:

| Mischungs-Nr.: | 1 | 2 | 3 |
|---|---|---|---|
| Zugfestigkeit (F) [MPa] | 23,9 | 22,3 | 22,0 |
| Bruchdehnung (D) [%] | 531 | 487 | 494 |
| Spannungswert bei 50% Dehnung (S₅₀) [MPa] | 1,4 | 2,2 | 2,0 |
| Spannungswert bei 100 % Dehnung (S₁₀₀) [MPa] | 2,3 | 3,2 | 3,0 |
| Spannungswert bei 300 % Dehnung (S₃₀₀) [MPa] | 8,6 | 9,6 | 9,3 |
| Härte Shore A, 23°C | 62 | 63 | 63 |
| Härte Shore A, 70°C | 57 | 56 | 56 |
| Rückprallelastizität bei 23°C (E₂₃) [%] | 44 | 42 | 42 |
| Rückprallelastizität bei 70°C (E₇₀) [%] | 62 | 61 | 60 |
| Abrieb 60er Schmirgel [nm3] | 112 | 133 | 131 |
| E₇₀-E₂₃ | 18 | 19 | 18 |
| S₃₀₀ x D | 4567 | 4675 | 4594 |

### Ergebnis:

In der Mischungsserie C) wird gezeigt, dass die Vulkanisateigenschaften (S₃₀₀ x D) eines Kautschukcompounds, der ein unmodifiziertes SBR-Gel und ein trimerisiertes Isophorondiisocyanat (Desmodur^{®} Z 4300) enthält, durch Zusätze unterschiedlicher Mengen an 1,4-Bis(β-hydroxyethoxy)benzol (Vernetzer 30/10) ohne Einbußen in der Elastizitätsdifferenz (E₇₀-E₂₃) verbessert werden.

## Patentansprüche

1. Kautschukmischungen bestehend aus nicht vemetzten Kautschuken (A), vernetzten Kautschukpartikeln (B), multifunktionellen Isocyanaten (C) sowie Polyolen (D), wobei, jeweils bezogen auf 100 Gew.-Teile (phr) der Kautschukkomponente (A), der Anteil in der Mischung an Komponente (B) 1 bis 150 Gew.-Teile, der Anteil an multifunktionellen Isocyanaten (Komponente C) 1 bis 100 Gew.-Teile und der Anteil an Komponente (D) 1 bis 50 Gew.-Teile beträgt, wobei als Polyolkomponente (D) Polyester-, Polyether-, Polycarbonatpolyole oder deren Mischungen eingesetzt werden, die ein mittleres Molekulargewicht von 62 bis 10.000 g/Mol besitzen.

2. Kautschukmischungen nach Anspruch 1, **dadurch gekennzeichnet, dass** jeweils bezogen auf 100 Gew.-Teile der Kautschukkomponente (A) 5 bis 100 Gew.-Teile an vemetzten Kautschukpartikeln (B), 3 bis 50 Gew.-Teile an multifunktionellen Isocyanaten (C) und 1 bis 30 Gew.-Teilen an Polyolen (D) in der Kautschukmischung vorhanden sind.

3. Kautschukmischungen nach Anspruch 1, **dadurch gekennzeichnet, dass** die vemetzten Kautschukpartikel (B) Teilchendurchmesser von 5 bis 1 000 nm und Quellungsindizes in Toluol von 1 bis 15 aufweisen.

4. Verwendung der Kautschukmischungen nach Anspruch 1 zur Herstellung von Kautschukvulkanisaten.

5. Verwendung der Kautschukmischungen nach Anspruch 1 zur Herstellung von Kautschukformkörpern aller Art, insbesondere zur Herstellung von Kabelmänteln, Schläuchen, Treibriemen, Förderbändern, Walzenbeschlägen, Reifen und Reifenbauteilen, Schuhsohlen, Dichtungsringen, Dämpfungselementen sowie Membranen.

## Claims

1. Rubber mixtures composed of uncrosslinked rubbers (A), crosslinked rubber particles (B), multifunctional isocyanates (C) and polyols (D), wherein the amount of component (B) in the mixture is from 1 to 150 parts by weight, the amount of multifunctional isocyanates (component C) is from 1 to 100 parts by weight and the amount of component (D) is from 1 to 50 parts by weight, in each case based on 100 parts by weight (phr) of the rubber component (A), wherein use is made as polyol component (D) of polyester polyols, polyether polyols, polycarbonate polyols or mixtures thereof that possess an average molecular weight from 62 to 10,000 g/mol.

2. Rubber mixtures according to Claim 1, **characterized in that** crosslinked rubber particles (B) are present at from 5 to 100 parts by weight, multifunctional isocyanates (C) at from 3 to 50 parts by weight and polyols (D) at from 1 to 30 parts by weight in the rubber mixture, in each case based on 100 parts by weight of the rubber component (A).

3. Rubber mixtures according to Claim 1, **characterized in that** the crosslinked rubber particles (B) have particle diameters of from 5 to 1000 nm and swelling indices in toluene of from 1 to 15.

4. Use of the rubber mixtures according to Claim 1 for producing rubber vulcanizates.

5. Use of the rubber mixtures according to Claim 1 for producing moulded rubber bodies of all kinds, especially for producing cable sheaths, hoses, drive belts, conveyor belts, roller coverings, tyres and tyre components, shoe soles, gaskets, damping elements and membranes.

## Revendications

1. Mélanges de caoutchoucs, constitués par des caoutchoucs non réticulés (A), des particules de caoutchouc réticulé (B), des isocyanates multifonctionnels, (C) ainsi que des polyols (D), où, à chaque fois par rapport à 100 parties en poids (phr) du composant de caoutchouc (A), la proportion dans le mélange de composant (B) est de 1 à 150 parties en poids, la proportion d'isocyanates multifonctionnels (composant C) est de 1 à 100 parties en poids et la proportion de composant (D) est de 1 à 50 % en poids, en utilisant, en tant que composant polyol (D), des polyester-, des polyéther- et des polycarbonate-polyols ou leurs mélanges, qui présentent un poids moléculaire moyen de 62 à 10000 g/mol.

2. Mélanges de caoutchoucs selon la revendication 1, **caractérisés en ce que**, à chaque fois par rapport à 100 parties en poids du composant de caoutchouc (A), on trouve 5 à 100 parties en poids de particules de caoutchouc réticulé (B), 3 à 50 parties en poids d'isocyanates multifonctionnels (C) et 1 à 30 parties en poids de polyols (D) dans le mélange de caoutchoucs.

3. Mélanges de caoutchoucs selon la revendication 1, **caractérisés en ce que** les particules de caoutchouc réticulé (B) présentent un diamètre de particule de 5 à 1000 nm et un indice de gonflement dans du toluène de 1 à 15.

4. Utilisation des mélanges de caoutchoucs selon la revendication 1 pour la préparation de produits de vulcanisation à base de caoutchouc.

5. Utilisation des mélanges de caoutchoucs selon la revendication 1 pour la réalisation de corps façonnés en caoutchouc de tous types, en particulier pour la réalisation de gaines de câbles, de flexibles, de courroies, de bandes transporteuses, de revêtements de cylindre, de pneumatiques et de pièces pour pneumatiques, de semelles de chaussures, de joints annulaires, d'éléments d'amortissement ainsi que de membranes.
